# DEMANDE DE BREVET EUROPEEN

(11) **EP 2 537 703 A1**
(43) Date de publication de la demande: **26.12.2012**
(21) Numéro de dépôt: 12171390.3
(22) Date de dépôt: 08.06.2012
(51) Int. Cl.: B60N 2/06, B60N 2/12, B60N 2/30, B60N 2/20, B60N 2/36

(54) **Siège de véhicule automobile**

(30) Priorité: 20.06.2011 FR 1155409
(71) Demandeur: CENTRE D'ETUDE ET DE RECHERCHE POUR L'AUTOMOBILE (CERA), 51100 Reims (FR)
(72) Inventeur: Brice, Patrick, 54110 Hudiviller (FR); Georges, Laurent, 08190 Roizy (FR); Airault, Jean-Yves, 56430 Concoret (FR); Carpentier, Alain, 51390 Gueux (FR)
(74) Mandataire: Sayettat, Julien Christian

(57) **Abrégé**

L'invention concerne un siège (1) de véhicule automobile comprenant une assise (2) et un dossier (3) rabattable en rotation depuis une configuration d'utilisation vers une configuration d'accès aux places arrière et une configuration escamotée, ledit siège comprenant en outre : un rail fixe ; un rail mobile (5) ; un moyen de verrouillage dudit rail mobile par rapport audit rail fixe selon une pluralité de positions ; un lien de rappel (7) élastique dudit rail mobile vers l'arrière ; une extrémité (8) dudit lien étant reliée à l'un desdits rails par l'intermédiaire d'un dispositif de rappel (9), ladite extrémité étant immobilisée par un verrou (10), ledit siège comprenant en outre un moyen de déverrouillage (11) temporaire dudit verrou, ledit moyen de déverrouillage étant agencé de manière à être activé par mise dudit dossier en configuration d'accès aux places arrière, de manière à libérer un débattement de ladite extrémité vers l'avant à l'encontre dudit dispositif.

## Description

L'invention concerne un siège de véhicule automobile.

Il est connu, notamment du document FR-2 914 241, de réaliser un siège de véhicule automobile comprenant une assise et un dossier rabattable en rotation depuis une configuration d'utilisation vers une configuration escamotée, où ledit dossier est rabattu sur ladite assise, ledit siège comprenant en outre :
- un rail fixe destiné à être fixé au sol dudit véhicule,
- un rail mobile sur lequel est fixé ladite assise, ledit rail mobile étant monté en coulissement longitudinal sur ledit rail fixe,
- un moyen de verrouillage dudit rail mobile par rapport audit rail fixe selon une pluralité de positions, ledit moyen étant agencé de manière à se déverrouiller par rabattement dudit dossier,
- un lien de rappel élastique dudit rail mobile vers l'arrière, ledit lien étant relié de part et d'autre auxdits rails, ledit lien étant monté de manière à exercer un effort de rappel lorsque ledit dossier est en configuration escamotée.

Un tel agencement permet d'éviter que le dossier du siège ne vienne en interférence avec un élément extérieur, tel qu'un dossier de siège avant ou une planche de bord, lors de son rabattement, le siège étant rappelé vers l'arrière par le lien de rappel élastique.

Dans le cas où le véhicule ne dispose pas de porte arrière, on peut prévoir en outre une configuration d'accès aux places arrière, où le dossier est incliné partiellement vers l'avant, de manière à faciliter le passage des usagers depuis une porte avant vers lesdites places.

Pour un tel accès aux places arrière, il est usuel de prévoir, de la même façon que pour la configuration escamotée, un déverrouillage du rail mobile par rapport au rail fixe, ceci de manière à permettre une avancée du siège facilitant l'accès attendu.

Et il peut être aussi prévu que le siège puisse s'avancer au delà de la position maximale avant qu'il peut adopter en situation de réception d'un passager, une telle sur-course permettant un accès encore amélioré aux places arrière.

Le lien peut alors être amené, lors de la mise en configuration d'accès aux places arrière, à exercer un rappel du rail mobile vers l'arrière, ce qui oblige l'utilisateur à exercer un effort à l'encontre dudit lien pour avancer le siège.

L'invention a pour but de pallier cet inconvénient.

A cet effet, l'invention propose un siège de véhicule automobile comprenant une assise et un dossier rabattable en rotation depuis une configuration d'utilisation vers :
- une configuration d'accès aux places arrière, où ledit dossier est incliné partiellement vers l'avant,
- et une configuration escamotée, où ledit dossier est rabattu sur ladite
   assise,
   ledit siège comprenant en outre :
- un rail fixe destiné à être fixé au sol dudit véhicule,
- un rail mobile sur lequel est fixé ladite assise, ledit rail mobile étant monté en coulissement longitudinal sur ledit rail fixe,
- un moyen de verrouillage dudit rail mobile par rapport audit rail fixe selon une pluralité de positions, ledit moyen étant agencé de manière à se déverrouiller par rabattement dudit dossier,
- un lien de rappel élastique dudit rail mobile vers l'arrière, ledit lien étant relié de part et d'autre auxdits rails, ledit lien étant monté de manière à exercer un effort de rappel lorsque ledit dossier est en configuration escamotée,
une extrémité dudit lien étant reliée à l'un desdits rails par l'intermédiaire d'un dispositif de rappel, ladite extrémité étant immobilisée par un verrou, ledit siège comprenant en outre un moyen de déverrouillage temporaire dudit verrou, ledit moyen de déverrouillage étant agencé de manière à être activé par mise dudit dossier en configuration d'accès aux places arrière, de manière à libérer un débattement de ladite extrémité vers l'avant à l'encontre dudit dispositif.

Dans cette description, les termes de positionnement dans l'espace (haut, bas, longitudinal, transversal, latéral, avant, arrière, ...) sont pris en référence au siège disposé dans le véhicule avec son dossier relevé en configuration d'utilisation.

Avec l'agencement proposé, du fait du débattement prévu, l'utilisateur est amené à contrer la force de rappel exercée par le dispositif de rappel - et non celle exercée par le lien de rappel - pour avancer le siège lorsqu'il veut accéder aux places arrière.

Le dispositif de rappel est notamment agencé de manière à exercer une force bien inférieure à celle qui serait exercée par le lien s'il n'était pas prévu un débattement de son extrémité.

L'utilisateur a ainsi à contrer une faible force de rappel, le dispositif de rappel ayant pour fonction de supprimer le débattement en ramenant l'extrémité de lien en situation d'immobilisation par le verrou lorsque la mise en configuration d'accès aux places arrière est désactivée, de sorte que le lien puisse exercer sa fonction de rappel du siège vers l'arrière lors de la mise du dossier en configuration escamotée.

D'autres particularités et avantages de l'invention apparaîtront dans la description qui suit, faite en référence aux figures jointes dans lesquelles :

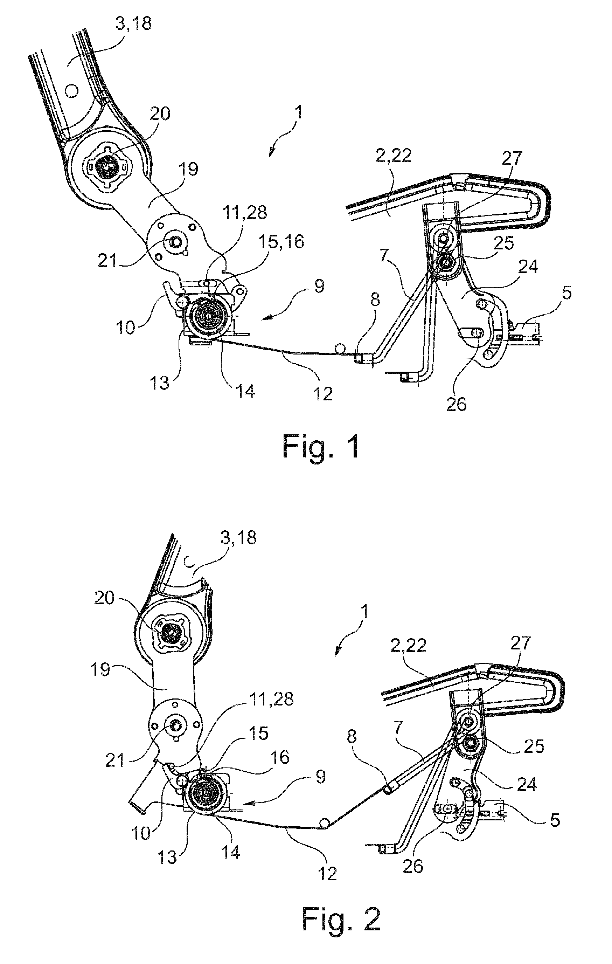

- la figure 1 est une vue latérale partielle d'un siège selon une réalisation, le dossier étant en configuration d'utilisation,
- la figure 2 est une vue analogue à la figure 1, le dossier étant en configuration d'accès aux places arrière.

En référence aux figures, on décrit un siège 1 de véhicule automobile comprenant une assise 2 et un dossier 3 rabattable en rotation depuis une configuration d'utilisation vers :
- une configuration d'accès aux places arrière, où ledit dossier est incliné partiellement vers l'avant,
- et une configuration escamotée, où ledit dossier est rabattu sur ladite assise,
ledit siège comprenant en outre :
- un rail fixe (non représenté) destiné à être fixé au dudit véhicule,
- un rail mobile 5 sur lequel est fixé ladite assise, ledit rail mobile étant monté en coulissement longitudinal sur ledit rail fixe,
- un moyen de verrouillage (non représenté) dudit rail mobile par rapport audit rail fixe selon une pluralité de positions, ledit moyen étant agencé de manière à se déverrouiller par rabattement dudit dossier,
- un lien de rappel 7 élastique dudit rail mobile vers l'arrière, ledit lien étant relié de part et d'autre auxdits rails, ledit lien étant monté de manière à exercer un effort de rappel lorsque ledit dossier est en configuration escamotée,
une extrémité 8 dudit lien étant reliée à l'un desdits rails - ici le rail mobile - par l'intermédiaire d'un dispositif de rappel 9, ladite extrémité étant immobilisée par un verrou 10, ledit siège comprenant en outre un moyen de déverrouillage 11 temporaire dudit verrou, ledit moyen de déverrouillage étant agencé de manière à être activé par mise dudit dossier en configuration d'accès aux places arrière, de manière à libérer un débattement de ladite extrémité vers l'avant à l'encontre dudit dispositif.

Selon la réalisation représentée, le dispositif de rappel 9 comprend un câble 12 enroulable sur une bobine 13 couplée à un ressort 14 d'actionnement en enroulement de ladite bobine, l'extrémité 8 étant reliée audit câble, le verrou 10 étant agencé de manière à bloquer ladite bobine en déroulement.

Le verrou 10 est sous forme d'une pièce montée en rotation, ladite pièce comprenant une butée 15 agencée pour coopérer avec une dent 16 prévue sur la bobine 13, un ressort annexe (non représenté) étant prévu pour rappeler la ladite butée vers ladite dent, ladite dent étant agencée pour permettre une libre rotation de ladite bobine en enroulement.

L'agencement proposé peut notamment être appliqué à un siège 1 de véhicule automobile comprenant :
- une embase, non visible sur les figures, saillante vers le haut et solidaire de l'arrière du rail mobile 5,
- un brancard de dossier 18 monté en rotation solidairement à la partie supérieure de ladite embase par l'intermédiaire d'une bielle arrière 19 dont les extrémités sont respectivement montées en rotation audit brancard de dossier, selon un premier axe 20 transversal, et en haut de ladite embase, selon un deuxième axe 21 transversal,
- un brancard d'assise 22 monté en rotation par rapport audit brancard de dossier selon un troisième axe transversal (non représenté) disposé au-dessus dudit premier axe,
- une bielle avant 24 dont les extrémités sont respectivement montées en rotation selon un quatrième axe 25 transversal à l'avant dudit brancard d'assise et selon un cinquième axe 26 transversal solidairement à l'avant dudit rail mobile,
- le lien de rappel élastique 7 étant monté coulissant autour d'une zone de renvoi 27 disposée à l'avant dudit brancard d'assise, de manière à exercer un effort de rappel vers l'arrière lors de la mise du dossier en configuration escamotée,
ledit dossier adoptant :
- la configuration escamotée par rotation dudit dossier autour dudit premier axe,
- la configuration d'accès aux places arrière par rotation de ladite bielle arrière autour dudit deuxième axe.

Le montage du lien 7 passant par la zone de renvoi 27 permet de réaliser l'effort de rappel attendu en raison du déplacement vers l'avant de ladite zone lors du rabattement du dossier 3 en configuration escamotée, la cinématique prévue créant une rotation de la bielle avant 24 vers l'avant autour du cinquième axe 26 lors du rabattement du dossier 3 en configuration escamotée, et donc une avancée du brancard d'assise 22.

Le verrouillage du rail mobile 5 par rapport audit rail fixe selon une pluralité de positions par un moyen de verrouillage, ledit moyen étant agencé de manière à se déverrouiller par rabattement dudit dossier, peut être réalisé de diverses façons, par exemple selon l'agencement décrit dans le document FR-2 914 593.

On notera que la cinématique décrite - notamment du fait de la présence de la bielle avant 24, de l'embase et de l'articulation du brancard d'assise 22 selon le troisième axe tel que positionné - permet, en configuration escamotée, que ledit brancard d'assise s'affaisse vers le bas, ce qui permet de bénéficier d'un espace de chargement accru dans le véhicule.

En outre, la cinématique proposée - notamment du fait du positionnement, dans la réalisation représentée, du deuxième axe 21 en dessous et en avant du premier axe 20 - permet un déplacement du bas du dossier 3 vers l'avant lors du positionnement dudit dossier en configuration d'accès aux places arrières, ce qui facilite l'accès auxdites places, ledit accès pouvant encore être facilité par une sur-course de coulissement du rail mobile 5 vers l'avant, telle qu'évoquée plus haut.

Selon la réalisation représentée, le moyen de déverrouillage 11 est sous forme d'un ergot 28 solidaire de la bielle arrière 19 et disposé à distance du deuxième axe 21, ledit ergot étant agencé pour entrer en interaction avec le verrou 10 et le déverrouiller lors de la mise en configuration d'accès aux places arrière.

## Revendications

1. Siège (1) de véhicule automobile comprenant une assise (2) et un dossier (3) rabattable en rotation depuis une configuration d'utilisation vers :
• une configuration d'accès aux places arrière, où ledit dossier est incliné partiellement vers l'avant,
• et une configuration escamotée, où ledit dossier est rabattu sur ladite assise,
ledit siège comprenant en outre :
• un rail fixe destiné à être fixé au sol dudit véhicule,
• un rail mobile (5) sur lequel est fixé ladite assise, ledit rail mobile étant monté en coulissement longitudinal sur ledit rail fixe,
• un moyen de verrouillage dudit rail mobile par rapport audit rail fixe selon une pluralité de positions, ledit moyen étant agencé de manière à se déverrouiller par rabattement dudit dossier,
• un lien de rappel (7) élastique dudit rail mobile vers l'arrière, ledit lien étant relié de part et d'autre auxdits rails, ledit lien étant monté de manière à exercer un effort de rappel lorsque ledit dossier est en configuration escamotée,
une extrémité (8) dudit lien étant reliée à l'un desdits rails par l'intermédiaire d'un dispositif de rappel (9), ladite extrémité étant immobilisée par un verrou (10), ledit siège comprenant en outre un moyen de déverrouillage (11) temporaire dudit verrou, ledit moyen de déverrouillage étant agencé de manière à être activé par mise dudit dossier en configuration d'accès aux places arrière, de manière à libérer un débattement de ladite extrémité vers l'avant à l'encontre dudit dispositif.

2. Siège selon la revendication 1, **caractérisé en ce que** le dispositif de rappel (9) comprend un câble (12) enroulable sur une bobine (13) couplée à un ressort (14) d'actionnement en enroulement de ladite bobine, l'extrémité (8) étant reliée audit câble, le verrou (10) étant agencé de manière à bloquer ladite bobine en déroulement.

3. Siège selon la revendication 2, **caractérisé en ce que** le verrou (10) est sous forme d'une pièce montée en rotation, ladite pièce comprenant une butée (15) agencée pour coopérer avec une dent (16) prévue sur la bobine (13), un ressort annexe étant prévu pour rappeler ladite butée vers ladite dent, ladite dent étant agencée pour permettre une libre rotation de ladite bobine en enroulement.

4. Siège selon l'une quelconque des revendications 1 à 3, **caractérisé en ce qu'**il comprend en outre :
• une embase saillante vers le haut et solidaire de l'arrière du rail mobile (5),
• un brancard de dossier (18) monté en rotation solidairement à la partie supérieure de ladite embase par l'intermédiaire d'une bielle arrière (19) dont les extrémités sont respectivement montées en rotation audit brancard de dossier, selon un premier axe (20) transversal, et en haut de ladite embase, selon un deuxième axe (21) transversal,
• un brancard d'assise (22) monté en rotation par rapport audit brancard de dossier selon un troisième axe transversal disposé au-dessus dudit premier axe,
• une bielle avant (24) dont les extrémités sont respectivement montées en rotation selon un quatrième axe (25) transversal à l'avant dudit brancard d'assise et selon un cinquième axe (26) transversal solidairement à l'avant dudit rail mobile,
• le lien de rappel (7) élastique étant monté coulissant autour d'une zone de renvoi (27) disposée à l'avant dudit brancard d'assise, de manière à exercer un effort de rappel vers l'arrière lors de la mise du dossier (3) en configuration escamotée,
ledit dossier adoptant :
• la configuration escamotée par rotation dudit dossier autour dudit premier axe,
• la configuration d'accès aux places arrière par rotation de ladite bielle arrière autour dudit deuxième axe.

5. Siège selon la revendication 4, **caractérisé en ce que** le moyen de déverrouillage (11) est sous forme d'un ergot (28) solidaire de la bielle arrière (19) et disposé à distance du deuxième axe (21), ledit ergot étant agencé pour entrer en interaction avec le verrou (10) et le déverrouiller lors de la mise en configuration d'accès aux places arrière.
